# EUROPÄISCHE PATENTSCHRIFT

(11) **EP 1 193 381 B1**
(45) Veröffentlichungstag und Bekanntmachung des Hinweises auf die Patenterteilung: **09.02.2005**
(21) Anmeldenummer: 01120220.7
(22) Anmeldetag: 23.08.2001
(51) Int. Cl.: F02D 33/02, F01L 25/08, F02D 13/02, F02D 41/14, F02D 41/00

(54) **Steuergerät zum Steuern eines Verbrennungsmotors mit variabel steuerbarem Ventilhub**
Controller for controlling a combustion engine with variable controllable valve lift
Contrôleur pour commander un moteur thermique à contrôle de variation de levée de soupapes

(30) Priorität: 29.09.2000 DE 10048250
(43) Veröffentlichungstag der Anmeldung: 03.04.2002
(73) Patentinhaber: Bayerische Motoren Werke Aktiengesellschaft, 80809 München (DE)
(72) Erfinder: Krämer, Gerd, 82065 Baierbrunn (DE); Bourdon, Klaus, 85276 Hettenshausen (DE); Eichlseder, Helmut, 85598 Baldham (DE); Konrad, Heiko, Dr., 82065 Baierbrunn (DE)

(56) Entgegenhaltungen:
- US-A- 4 509 484
- US-A- 6 039 026
- PATENT ABSTRACTS OF JAPAN vol. 010, no. 265 (M-515), 10. September 1986 (1986-09-10) & JP 61 087944 A (MAZDA MOTOR CORP), 6. Mai 1986 (1986-05-06)

## Beschreibung

Die Erfindung bezieht sich auf ein Steuergerät zum Steuern eines Verbrennungsmotors mit variabel steuerbarem Ventilhub nach dem Oberbegriff des einzigen Patentanspruchs.

Ein derartiges Steuergerät ist beispielsweise aus der DE 198 47 851 A1 bekannt. Das hieraus bekannte Steuergerät veranlasst eine Erhöhung des Öffnungsgrades einer Drosselklappe im Ansaugtrakt bei einem Verbrennungsmotor mit variabel steuerbarem Ventilhub bei niedriger oder mittlerer Last des Verbrennungsmotors, um einen sogenannten unerwünschten Pumpverlust zu reduzieren.

Verbrennungsmotoren mit variabel steuerbarem Ventilhub zeigen jedoch gerade im ungedrosselten Zustand große Unterschiede zwischen dem gewünschten Soll-Ventilhub und dem tatsächlich eingestellten Ist-Ventilhub. Diese Regelabweichungen sind toleranzabhängig und können in positive wie auch in negative Richtung wirken. Diese Ungleichverteilung führt bei einem Betrieb des Verbrennungsmotors zu einem ungleichen Verbrennungsluftverhältnis, das wiederum zu einer verstärkten Laufunruhe führt.

Es ist Aufgabe der Erfindung, ein Steuergerät eingangs genannter Art derart zu verbessern, dass mit dem durch das Steuergerät ausgeführten Verfahren zum Steuern des Verbrennungsmotors der Komfort gesteigert, der Kraftstoff reduziert und eine unnötige Wirkungsgradverschlechterung verhindert wird.

Diese Aufgabe wird durch die Merkmale des einzigen Patentanspruchs gelöst.

Erfindungsgemäß wird mittels eines Steuergerätes eingangs genannter Art die Laufruhe des Verbrennungsmotors überwacht. Bei Überschreiten eines definierten Laufunruheschwellwertes und bei Vorliegen eines Ventilhubes, insbesondere eines Soll-Ventilhubes, der kleiner als eine vorgegebene Schwelle (z. B. kleiner 1 mm) ist, wird die Drosselklappe in Schließrichtung betätigt, bis der Laufunruheschwellwert wieder unterschritten ist.

Um eine unzulässig hohe Laufunruhe zu vermeiden wird die Luftzuführung demnach gedrosselt. Zur Bestimmung der zulässigen Laufunruhe bzw. zur Definition eines definierten Laufunruheschwellwertes können Motordrehungleichförmigkeitswerte oder gleichwertige Signale, die beispielsweise aus einer lonenstrom- oder Druckmessung gewonnen werden, herangezogen werden. Methoden zur Laufruheermittlung sind bereits bekannt. Da der Drosselvorgang also nur bei unzulässiger Laufunruhe stattfindet, wird im übrigen keine Verschlechterung des Wirkungsgrades des Verbrennungsmotors vorgenommen. Damit können abhängig von Fertigungsstreuungen immer die Ventilhübe eingestellt werden, die für den niedrigsten Kraftstoffverbrauch benötigt werden.

## Patentansprüche

1. Steuergerät zum Steuern eines Verbrennungsmotors mit variabel steuerbarem Ventilhub und mit einer Drosselklappe im Ansaugtrakt, **dadurch gekennzeichnet, daß** das Steuergerät Mittel aufweist, durch die die Laufruhe des Verbrennungsmotors überwacht wird und durch die bei Überschreiten eines definierten Laufunruheschwellwertes und bei einem Ventilhub, der kleiner als eine vorgegebene Schwelle ist, die Drosselklappe in Schließrichtung betätigt wird, bis der Laufunruheschwellwert wieder unterschritten ist.

## Claims

1. A control device for controlling an internal-combustion engine having a variably controllable valve stroke and a throttle valve in the intake section, **characterised in that** the control device has means by which the running smoothness of the internal-combustion engine is monitored and by which, when a defined uneven running threshold value is exceeded and in the case of a valve stroke which is smaller than a predetermined threshold, the throttle valve is actuated in the closing direction until the uneven running threshold value is again fallen below.

## Revendications

1. Appareil de commande d'un moteur thermique comportant une variation de course de soupapes réglable et un clapet d'étranglement dans la ligne d'admission,
**caractérisé en ce que**
l'appareil comprend des moyens qui assurent la surveillance de la douceur de marche du moteur et qui, quand à la fois un seuil défini de manque de douceur de marche est dépassé et une course de soupapes est inférieure à un seuil prédéfini, actionnent le clapet d'étranglement dans le sens de la fermeture jusqu'à retour en dessous du seuil de manque de douceur de marche.
